# EUROPEAN PATENT APPLICATION

(11) **EP 3 556 794 A1**
(43) Date of publication of application: **23.10.2019**
(21) Application number: 18167784.0
(22) Date of filing: 17.04.2018
(51) Int. Cl.: C08G 73/10, G01N 21/27, G01N 21/359, G01N 21/75

(54) **POLYCONDENSATION STOICHIOMETRY CONTROL**

(71) Applicant: SABIC Global Technologies B.V., 4612 PX Bergen op Zoom (NL)
(72) Inventor: Lioba Maria, KLOPPENBURG, Mt. Vernon, IN Indiana 47620-9367 (US); Yusuf, SULUB, Mt. Vernon, IN Indiana 47620-9367 (US); Cesar, GONZALEZ SERRANO, Mt. Vernon, IN Indiana 47620-9367 (US); Roy Ray, ODLE, Mt. Vernon, IN Indiana 47620-9367 (US)
(74) Representative: Balder IP Law, S.L.

(57) **Abstract**

A method of making a polyetherimide including: setting a target range for the anhydride-amine stoichiometry in a reaction mixture; combining a solvent, a diamine, a bis(ether anhydride), and an optional end capping agent to form the reaction mixture wherein the reaction mixture has a polyamic acid content; analyzing the amine and anhydride end group content of the reaction mixture using near infrared vibrational spectroscopy; calculating the anhydride-amine stoichiometry; comparing the calculated anhydride-amine stoichiometry to the target stoichiometry, and, when necessary, adjusting the concentration of bis(ether anhydride) or diamine based on the comparison of the calculated anhydride-amine stoichiometry to the target stoichiometry.

## Description

### BACKGROUND

Polyetherimides are highly useful engineering thermoplastics. Polyetherimides can be made by solution polycondensation polymerization methods or by melt polycondensation polymerization methods. Both polymerization methods offer advantages but each method also suffers from drawbacks. Further improvements to polycondensation polymerization methods are needed.

### BRIEF DESCRIPTION

A method of making a polyetherimide comprising: setting a target range for the anhydride-amine stoichiometry in a reaction mixture; combining a solvent, a diamine, a bis(ether anhydride), and an optional end capping agent to form the reaction mixture wherein the reaction mixture has a polyamic acid content; analyzing the amine and anhydride end group content of the reaction mixture using near infrared vibrational spectroscopy; calculating the anhydride-amine stoichiometry; comparing the calculated anhydride-amine stoichiometry to the target stoichiometry, and, when necessary, adjusting the concentration of bis(ether anhydride) or diamine based on the comparison of the calculated anhydride-amine stoichiometry to the target stoichiometry.

In some aspects, a method of making a polyetherimide comprises: setting a target range for the anhydride-amine stoichiometry in a reaction mixture; combining a solvent, a diamine, a bis(ether anhydride), and an optional end capping agent to form the reaction mixture having a solids content of 20 to 70 wt% wherein the reaction mixture has a polyamic acid content; sampling the reaction mixture under super-atmospheric pressure; analyzing the amine and anhydride end group content of the reaction mixture using near infrared vibrational spectroscopy; calculating the anhydride-amine stoichiometry; comparing the calculated anhydride-amine stoichiometry to the target stoichiometry, and, when necessary, adjusting the concentration of bis(ether anhydride) or diamine based on the comparison of the calculated anhydride-amine stoichiometry to the target stoichiometry.

The above described and other features are exemplified by the following figures and detailed description.

### BRIEF DESCRIPTION OF THE DRAWINGS

The following figures are exemplary embodiments wherein the like elements are numbered alike.
FIG. 1 is a schematic representation of a reaction apparatus;
FIG. 2 is a schematic representation of a NIR probe configuration; and
FIG. 3 is a graphical representation of data from the Examples.

### DETAILED DESCRIPTION

Polyetherimides have typically been produced using either a polycondensation route or a substitution route. In the polycondensation route stoichiometric control is important to the success of the reaction. Stoichiometry has typically been monitored by withdrawing a sample from the reaction mixture, testing the sample and then modifying the reactants as needed. In the case of a solution polycondensation, a sample is removed from the reaction mixture, the solvent is removed and the polyamic acid is converted to the polyetherimide by ring closure. The resulting material is pressed into a film. The film is analyzed by FTIR and the mole percent of remaining amine and anhydride end groups is calculated from the IR spectrum. This process involves delay during testing. During the delay conditions in the reaction mixture may change, making the system of testing and modification imprecise.

It has been discovered that the anhydride-amine stoichiometry of a reaction mixture containing a polyamic acid intermediate in polycondensation, can be detected by near infrared vibrational spectroscopy (NIR). Thus NIR monitoring of the anhydride-amine stoichiometry of the reaction mixture containing polyamic acid can be used to follow the progress of the reaction and adjust the stoichiometry of the reaction mixture to obtain the desired polyetherimide product without the need to further process the sample for testing. NIR can be performed directly on the reaction mixture as explained below.

Anhydride-amine stoichiometry is defined as the mole% of anhydride - the mole% of amine groups. An anhydride-amine stoichiometry with a negative value indicates an excess of amine groups.

Polyetherimides comprise more than 1, for example 2 to 1000, or 5 to 500, or 10 to 100 structural units of formula (1) 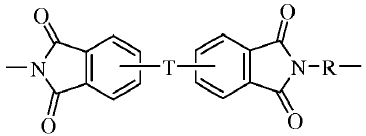 wherein each R is independently the same or different, and is a substituted or unsubstituted divalent organic group, such as a substituted or unsubstituted C₆₋₂₀ aromatic hydrocarbon group, a substituted or unsubstituted straight or branched chain C₄₋₂₀ alkylene group, a substituted or unsubstituted C₃₋₈ cycloalkylene group, in particular a halogenated derivative of any of the foregoing. In some aspects R is divalent group of one or more of the following formulas (2) 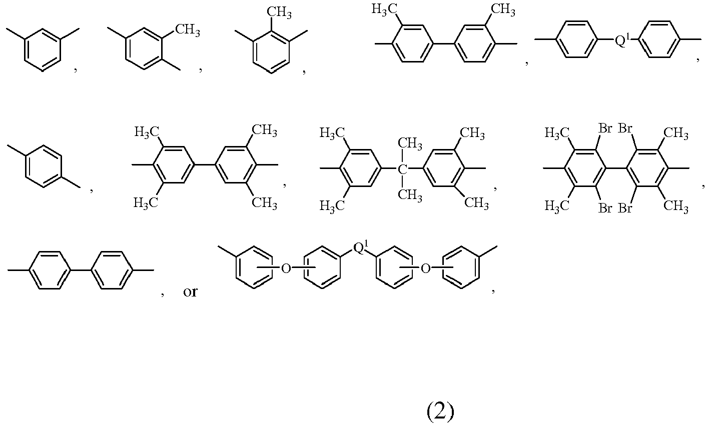 wherein Q¹ is -O-, -S-, -C(O)-, -SO₂-, -SO-, -P(R^{a})(=O)- wherein R^{a} is a C₁₋₈ alkyl or C₆₋₁₂ aryl, -C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In some aspects R is m-phenylene, p-phenylene, or a diarylene sulfone, in particular bis(4,4'-phenylene)sulfone, bis(3,4'-phenylene)sulfone, bis(3,3'-phenylene)sulfone, or a combination comprising at least one of the foregoing. In some aspects, at least 10 mole percent or at least 50 mole percent of the R groups contain sulfone groups, and in other aspects no R groups contain sulfone groups.

Further in formula (1), T is -O- or a group of the formula -O-Z-O-wherein the divalent bonds of the -O- or the -O-Z-O- group are in the 3,3', 3,4', 4,3', or the 4,4' positions, and Z is an aromatic C₆₋₂₄ monocyclic or polycyclic moiety optionally substituted with 1 to 6 C₁₋₈ alkyl groups, 1 to 8 halogen atoms, or a combination comprising at least one of the foregoing, provided that the valence of Z is not exceeded. Exemplary groups Z include groups of formula (3) 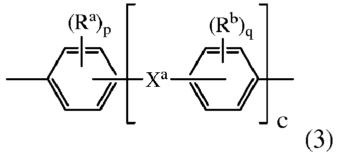 wherein R^{a} and R^{b} are each independently the same or different, and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-,-S(O)-, -S(O)₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C6 arylene groups connected thereto are each connected to a common alkylidene carbon or to different carbons of the C₁₋₁₈ organic bridging group. A specific example of a group Z is a divalent group of formula (3a) 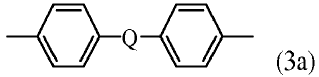 wherein Q is -O-, -S-, -C(O)-, -SO₂-, -SO-, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (including a perfluoroalkylene group). In a specific aspect Z is a derived from bisphenol A, such that Q in formula (3a) is 2,2-isopropylidene.

In an aspect in formula (1), R is m-phenylene, p-phenylene, or a combination comprising at least one of the foregoing, and T is -O-Z-O- wherein Z is a divalent group of formula (3a). Alternatively, R is m-phenylene, p-phenylene, or a combination comprising at least one of the foregoing, and T is -O-Z-O wherein Z is a divalent group of formula (3a) and Q is 2,2-isopropylidene. Alternatively, the polyetherimide can be a copolymer comprising additional structural polyetherimide units of formula (1) wherein at least 50 mole percent (mol%) of the R groups are bis(4,4'-phenylene)sulfone, bis(3,4'-phenylene)sulfone, bis(3,3'-phenylene)sulfone, or a combination comprising at least one of the foregoing and the remaining R groups are p-phenylene, m-phenylene or a combination comprising at least one of the foregoing; and Z is 2,2-(4-phenylene)isopropylidene, i.e., a bisphenol A moiety.

In some aspects, the polyetherimide is a copolymer that optionally comprises additional structural imide units that are not polyetherimide units, for example imide units of formula (4) 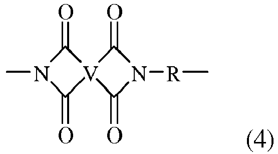 wherein R is as described in formula (1) and each V is the same or different, and is a substituted or unsubstituted C₆₋₂₀ aromatic hydrocarbon group, for example a tetravalent linker of the formulas 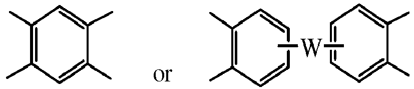 wherein W is a single bond, -O-, -S-, -C(O)-, -SO₂-, -SO-, a C₁₋₁₈ hydrocarbylene group, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (which includes perfluoroalkylene groups). These additional structural imide units preferably comprise less than or equal to 30 mol% of the total number of units, and more preferably can be present in amounts of 0 to 10 mol% of the total number of units, or 0 to 5 mol% of the total number of units, or 0 to 2 mole % of the total number of units. In some aspects, no additional imide units are present in the polyetherimide.

The polyimide or the polyetherimide is prepared by the reaction of an aromatic bis(ether anhydride) of formula (5) or a chemical equivalent thereof, with an organic diamine of formula (6) 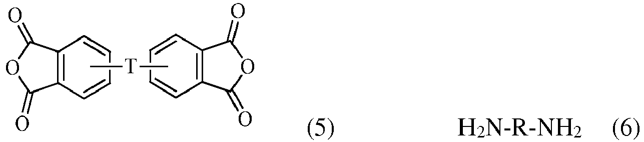 wherein T and R are defined as described above. Copolymers of the polyetherimides can be manufactured using a combination of an aromatic bis(ether anhydride) of formula (5) and an additional bis(anhydride) that is not a bis(ether anhydride), for example pyromellitic dianhydride or bis(3,4-dicarboxyphenyl) sulfone dianhydride.

Illustrative examples of aromatic bis(ether anhydride)s include 2,2-bis[4-(3,4-dicarboxyphenoxy)phenyl]propane dianhydride (also known as bisphenol A dianhydride or BPADA), 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; 4,4'-(hexafluoroisopropylidene)diphthalic anhydride; and 4-(2,3-dicarboxyphenoxy)-4'-(3,4-dicarboxyphenoxy)diphenyl sulfone dianhydride. A combination of different bis(ether anhydride)s can be used.

Examples of organic diamines include 1,4-butane diamine, 1,5-pentanediamine, 1,6-hexanediamine, 1,7-heptanediamine, 1,8-octanediamine, 1,9-nonanediamine, 1,10-decanediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone (also known as 4,4'-diaminodiphenyl sulfone (DDS)), and bis(4-aminophenyl) ether. Any regioisomer of the foregoing compounds can be used. C₁₋₄ alkylated or poly(C₁₋₄)alkylated derivatives of any of the foregoing can be used, for example a polymethylated 1,6-hexanediamine. Combinations of these compounds can also be used. In some aspects the organic diamine is m-phenylenediamine, p-phenylenediamine, 4,4'-diaminodiphenyl sulfone, 3,4'-diaminodiphenyl sulfone, 3,3'-diaminodiphenyl sulfone, or a combination comprising at least one of the foregoing.

The polyimides/polyetherimides can have a melt index of 0.1 to 10 grams per minute (g/min), as measured by American Society for Testing Materials (ASTM) D1238 at 340 to 370°C, using a 6.7 kilogram (kg) weight. In some aspects, the polyetherimide has a weight average molecular weight (Mw) of 1,000 to 150,000 grams/mole (Dalton), as measured by gel permeation chromatography, using polystyrene standards. In some aspects the polyetherimide has an Mw of 10,000 to 80,000 Daltons. Such polyetherimides typically have an intrinsic viscosity greater than 0.2 deciliters per gram (dl/g), or, more specifically, 0.35 to 0.7 dl/g as measured in m-cresol at 25°C.

In some aspects, polycondensation is conducted in the presence of an end capping agent. Exemplary end capping agents include, but are not limited to phthalic anhydride, aniline, C₁-C₁₈ linear, branched or cyclic aliphatic monoamines, and monofunctional aromatic amines of the formula 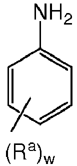 wherein R^{a} is as defined above and w is an integer from 0 to 5. If the end capping agent is an amine, the amount of the end capping agent added to the reaction mixture can be in the range of about 0-10 mole percent of the total amount of dianhydride monomer. If, one the other hand, the end capping agent is an anhydride, then the amount of the end capping agent added to the reaction mixture can be in the range of about 0-10 mole percent of the amount of the diamine monomer. The end capping agent can be added at any time, e.g., to the diamine, the bis(ether anhydride) or a combination thereof, before or after the polycondensation reaction has started. In some aspects, the end capping agents are mixed with or dissolved into reactants having the similar functionality. For example, monoamine end capping agents can be mixed with or dissolved into diamines, and monoanhydride can be mixed with or dissolved into bis(ether anhydrides).

Polycondensation of bis(ether anhydride) and diamine (imidization) may be conducted in the presence of a catalyst. Exemplary catalysts include aryl phosphinate salts, guanidinium salts, pyridinium salts, imidazolium salts, tetra(C₇₋₂₄ arylalkylene) ammonium salts, dialkyl heterocycloaliphatic ammonium salts, bis-alkyl quaternary ammonium salts, (C₇₋₂₄arylalkylene)(C₁₋₁₆alkyl) phosphonium salts, (C₆₋₂₄aryl)(C₁₋₁₆alkyl) phosphonium salts, phosphazenium salts, and combinations thereof.

Exemplary solvents include relatively non-polar solvents, specifically with a boiling point above about 100°C, and more specifically above about 150°C, for example halogenated aromatics such as chlorobenzene, dichlorobenzene (including o-dichlorobenzene), bromobenzene, dichlorotoluene, and 1,2,4-trichlorobenzene, nitrobenzene, benzonitrile, pyridine, pyrrole, sulfolane, methyl benzoate, hexamethyl phosphoramide, diphenyl sulfone, dimethyl sulfoxide, diphenylether,, alkoxybenzene such as anisole, veratrole, and phenetole, and alkylated phenols such as ortho, meta or para cresol. Ortho-dichlorobenzene and anisole can be particularly mentioned solvents.

The polyetherimides are generally prepared at a temperature of at least 110°C, specifically 150°C to 275°C, more specifically 175°C to 225°C. At temperatures below 110°C, reaction rates may be too slow for economical operation. Atmospheric or super-atmospheric pressures can be used, for example up to 5 atmospheres, to facilitate the use of high temperatures without causing solvent to be lost by evaporation.

The reacting of the bis(ether anhydride) and the diamine to form polyetherimide is generally conducted for about 0.5 to about 30 hours, specifically about 1 to about 20 hours. Advantageously, the reaction is complete 20 hours or less.

The solvent, diamine and bis(ether anhydride) can be combined in amounts such that the total solids content during the reaction to form polyetherimide (1) are 5 weight percent (wt%) to 70 wt%, specifically 10 wt% to 70 wt%, more specifically 20 wt% to 70 wt%. "Total solids content" expresses the proportion of the reactants as a percentage of the total weight including liquids present in the reaction at any given time.

It can be desirable to have low water content in the reaction mixture. Thus, in some aspects, the combined bis(ether anhydride), diamine, optional catalyst, optional end cap, and the solvent, if present, (reaction mixture) can comprise less than or equal to 200 parts per million parts of the combined components weight (ppm) of water, more specifically, less than or equal to 100 ppm of water, still more specifically, less than or equal to 50 ppm of water, or, yet more specifically, less than or equal to 25 ppm of water, based on the combined weight of bis(ether anhydride), diamine, the optional catalyst, the optional end cap, and the solvent. Water is a byproduct of the polycondensation and is removed in boiling solvents. The reaction mixture can comprise less than 5 wt% to 1 ppm of water depending on the reaction conditions and the point of the reaction.

The target anhydride-amine stoichiometry may be -25 to 25 mole%, -10 to 10 mole%, -5 to 5 mole%, or -2 to 2 mole%. A proper stoichiometric balance between bis(ether anhydride) and diamine is maintained to obtain the molecular weight of the polymer, and/or result in polymers with excess amine or anhydride end groups. Accordingly, in some aspects, imidization proceeds adding diamine to a mixture of bis(ether anhydride) and solvent to form a reaction mixture having a targeted initial anhydride-amine stoichiometry; heating the reaction mixture to a temperature of at least 100°C (optionally in the presence of an imidization catalyst); analyzing the amine and anhydride end group content of the heated reaction mixture to determine the actual anhydride-amine stoichiometry; and, if necessary, adding bis(ether anhydride) or diamine to the analyzed reaction mixture to adjust the anhydride-amine stoichiometry.

Analyzing the amine and anhydride end group content of the reaction mixture is performed by near infra-red spectroscopy (NIR). Analysis is performed on the reaction mixture without modification of the reaction mixture. NIR can analyze the amine and anhydride end group content of the reaction mixture containing the polyamic acid without converting the polyamic acid to polyetherimide. The reaction mixture may move continuously or intermittently through a channel having a fixed path length and located between an emitter and a receiver. The fixed path length may be 2 to 8, or 4 to 6 millimeters (mm). In some aspects where the solids content is greater than 50% the path length may be 5 to 7 mm, and the measurement may be taken while the reaction system pressure is super-atmospheric. Using a near-infrared (NIR) spectrometer, NIR light emitted from the spectrometer source is sent to the emitter and passes through the reaction mixture in the channel. The receiver receives NIR light that has not been absorbed by the reaction mixture and sends it to the detector of NIR spectrometer where an absorbance spectrum is generated. The absorbance spectrum of the polyamic acid solution, including the amine and anhydride groups, are used in a multivariate calibration model to preduct the amine and anhydride end group content.

After the anhydride-amine stoichiometry is determined additional reactants (e.g., bis(ether anhydride) or amine) may be added - either manually or by process control.

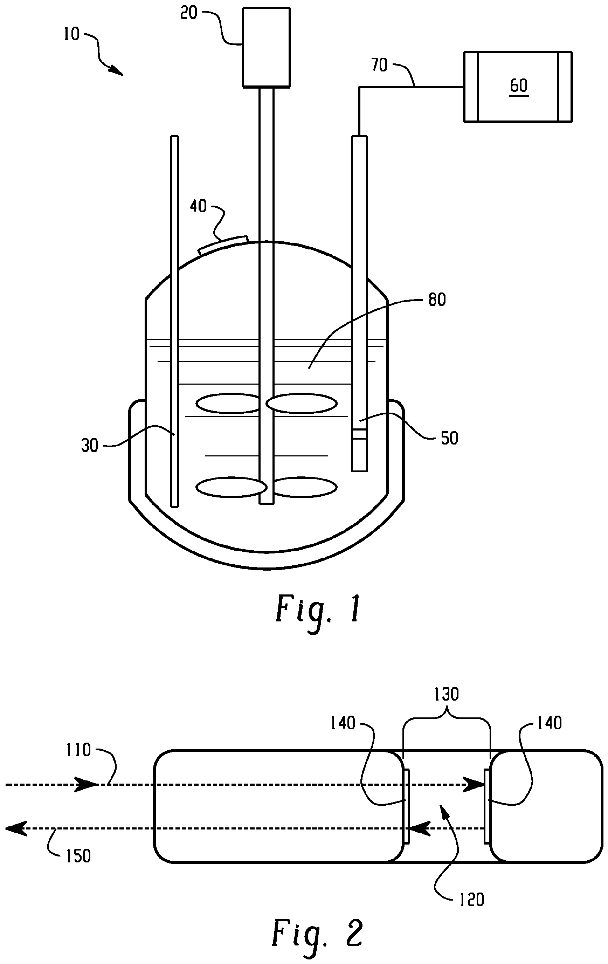

FIG. 1 is a schematic representation of a polymer reactor. The reactor 10 has a mixing element 20, an optional dip tube 30, a sight glass 40, and a NIR probe 50. The NIR probe 50 is connected a NIR spectrometer 60 by fiber optics 70. The NIR probe 50 monitors the anhydride and amine end group content of the reaction mixture 80. Additional reactants can be added by process control (not shown).

FIG. 2 shows one possible NIR probe configuration. Probe 100 has an incoming NIR beam 110 which passes through reaction mixture 120 present in path 130. Path 130 may have a path length as described above. The NIR beam which passes through the reaction mixture 120 is reflected by the window 140 to form outgoing NIR beam 150 which is returned to the spectrometer 60 shown in FIG. 1.

This disclosure is further illustrated by the following examples, which are non-limiting.

### EXAMPLES

### Example 1

In this example, an 8 gallon (30.3 liters) reactor was used to manufacture polyetherimide (PEI) polymer with an approximately 5 mole% m-phenylene diamine (mPD) excess. After the reactions were initiated, bisphenol A dianhydride (BPADA) was gradually added every 30 minutes until the batch was on stoichiometry. Next, more BPADA was added at 30 minute intervals to reach an anhydride rich polyetherimide.

The reactor was first charged with 9.48 kilograms (kg) of ortho dichlorobenzene (oDCB) at room temperature, followed by the addition of 3.5 kg of BPADA. Then 0.76 kg mPD and 36.81 grams of phthalic anhydride (PA) were added to the reactor. Table 1, lists the charges for Batches 1 and 2. For both batches, the solids were maintained at approximately 30%.

**Table 1**

| **Batch** | **BPADA Charge (g)** | **mPD charge (g)** | **PA Charge (g)** | **Initial oDCB Charge (g)** |
|---|---|---|---|---|
| 1 | 3500 | 768 | 36.00 | 10460 |
| 2 | 3500 | 768 | 36.81 | 10510 |

The reactor walls were sprayed with cold oDCB in order to wash any solids from the walls. Then the reactor was pressurized and de-pressurized with nitrogen to displace oxygen at room temperature. The mixture was heated to 165°C over a period of 90-120 minutes. During this time, the agitator load was carefully monitored and agitation slowed down to prevent any load spike. The water produced in the reaction was distilled from the reactor with some amount of oDCB. After reaching 165°C, the temperature was maintained for 2 hours at 165°C, using hot dry oDCB (160°C) to make up for any weight losses. The vapor was condensed using a shell and tube heat exchanger and collected in a receiver tank.

Inline near-infrared (NIR) measurements were obtained using a transflectance probe with an effective path length of 5 mm. The apparatus was similar to that shown in FIGS 1 and 2.

Every 30 minutes, a sample was taken for stoichiometry (residual amine and anhydride end groups) analysis by off line Fourier Transform Infrared analysis as described in U.S. Patent No. 8,426,533. The sampling was done through a dip tube by pressurizing the reactor to 30 pounds per square inch gauge (0.21 Megapascals). The exact sample time was recorded in order to compare FTIR and inline NIR stoichiometry measurements at the sampling time stamp. After sampling, 25 g of BPADA (as a 30% weight solution in oDCB) was added to the reactor all at once through the sight glass opening. The reaction mixture was agitated at set temperature for an additional 30 minutes at which point another sample was acquired. This process was repeated every 30 minutes. Tables 2 and 3 list the charges, sampling times, and reference offline FTIR analytical results (anhydride end group stoich mole%, amine end group stoich mole% and anhydride-amine stoichiometry) for Batches 1 and 2 respectively. The % solids listed in Table 2 refers to the amount of solids remaining after the solvent was removed from the sample taken for FTIR testing.

**Table 2. Batch 1**

| **Sample #** | **Sample Time** | **Anydride end group Stoich** | **Amine end group Stoich** | **Anhydride-amine stoichiometry** | **Addition (g)** | **Addition Time** | **% Solids** |
|---|---|---|---|---|---|---|---|
| | | **mole %** | **mole %** | **mole %** | | | |
| 1 | 12:47 | 0.062 | 5.717 | -5.655 | 25 | 13:08 | 29.02 |
| 2 | 13:43 | 0.071 | 5.116 | -5.045 | 25 | 13:49 | 27.69 |
| 3 | 14:22 | 0.063 | 4.088 | -4.025 | 25 | 14:29 | 28.75 |
| 4 | 15:02 | 0.056 | 3.668 | -3.612 | 25 | 15:07 | 28.54 |
| 5 | 15:42 | 0.068 | 2.536 | -2.468 | 25 | 15:47 | 27.69 |
| 6 | 16:52 | 0.058 | 1.641 | -1.583 | 25 | 17:04 | 28.75 |
| 7 | 9:55 | 0.063 | 0.700 | -0.637 | 25 | 10:00 | 27.07 |
| 8 | 10:32 | 0.005 | 0.037 | -0.032 | 25 | 10:35 | 28.30 |
| 9 | 11:06 | 0.555 | 0.110 | 0.445 | 25 | 11:12 | 27.78 |
| 10 | 11:44 | 1.192 | 0.112 | 1.080 | 25 | 11:47 | 27.15 |
| 11 | 12:18 | 1.883 | 0.111 | 1.772 | 25 | 12:23 | 26.71 |
| 12 | 12:56 | 2.403 | 0.096 | 2.307 | 25 | 12:58 | 26.67 |
| 13 | 13:35 | 3.128 | 0.087 | 3.041 | 25 | 13:40 | 26.82 |
| 14 | 14:11 | 3.773 | 0.080 | 3.693 | 25 | 14:15 | 26.33 |
| 15 | 14:48 | 3.742 | 0.079 | 3.663 | 25 | 14:51 | 28.95 |
| 16 | 16:20 | 4.740 | 0.067 | 4.673 | 25 | none | 26.43 |

**Table 3. Batch 2**

| **Sample #** | **Sample Time** | **Anydride end group Stoich** | **Amine end group Stoich** | **Anhydride-amine stoichiometry** | **Addition (g)** | **Addition Time** | **% Pan Solids** |
|---|---|---|---|---|---|---|---|
| | | **mole %** | **mole %** | **mole %** | | | |
| 1 | 15:00 | 0.059 | 6.036 | -5.977 | 25 | 15:10 | 28.87 |
| 2 | 15:40 | 0.064 | 4.957 | -4.893 | 25 | 15:45 | 28.64 |
| 3 | 16:21 | 0.065 | 4.240 | -4.175 | 25 | 16:25 | 29.82 |
| 4 | 16:53 | 0.059 | 3.159 | -3.100 | 25 | 16:57 | 27.64 |
| 5 | 10:33 | 0.071 | 2.587 | -2.516 | 25 | 10:36 | 27.40 |
| 6 | 11:08 | 0.045 | 1.884 | -1.839 | 25 | 11:12 | 26.78 |
| 7 | 11:43 | 0.060 | 0.893 | -0.833 | 25 | 11:46 | 27.62 |
| 8 | 12:18 | 0.025 | 0.100 | -0.075 | 25 | 12:18 | 25.60 |
| 9 | 12:55 | 0.518 | 0.092 | 0.426 | 25 | 12:55 | 26.96 |
| 10 | 13:30 | 1.142 | 0.097 | 1.045 | 25 | 13:30 | 26.73 |
| 11 | 14:02 | 1.782 | 0.085 | 1.697 | 25 | 14:02 | 26.78 |
| 12 | 14:35 | 2.511 | 0.098 | 2.413 | 25 | 14:35 | 26.33 |
| 13 | 15:08 | 3.155 | 0.080 | 3.075 | 25 | 15:11 | 25.64 |
| 14 | 15:41 | 3.787 | 0.071 | 3.716 | 25 | 15:44 | 25.22 |
| 15 | 16:13 | 4.422 | 0.072 | 4.350 | 25 | 16:17 | 25.49 |
| 16 | 16:50 | 5.163 | 0.057 | 5.106 | 25 | 16:55 | 25.15 |

Chemometric multivariate partial-least squares (PLS) calibration models for BPADA (mole %) and mPD (mole %) were developed using Batch 2. These models were validated on spectral data acquired in Batch 1. Table 4, lists Batch 1 validation results with the corresponding inline NIR predictions for anhydride end groups, amine end groups and anhydride-amine stoichiometry. These results clearly shows the capability of using in-line NIR spectroscopy to track stoichiometry in a reaction mixture comprising a polyamic acid at 25-30% solids.

**Table 4.**

| **Sample #** | **Sample Time** | **Anydride end group Stoich by-FTIR** | **Anydride end group-Stoich by InLine NIR** | **Amine end group Stoich-by FTIR** | **Amine end group Stoich by Inline NIR** | **Anydride-amine stoichiometry by FTIR** | **Anydride-amine stoichiometry by Inline NIR** | **Addition (g)** | **Addition Time** | **% Solids** |
|---|---|---|---|---|---|---|---|---|---|---|
| | | **mole %** | **mole %** | **mole %** | **mole %** | **mole %** | **mole %** | | | |
| 1 | 12:47 | 0.062 | 0.240 | 5.717 | 5.626 | -5.655 | -5.386 | 25 | 13:08 | 29.02 |
| 2 | 13:43 | 0.071 | 0.070 | 5.116 | 4.121 | -5.045 | -4.051 | 25 | 13:49 | 27.69 |
| 3 | 14:22 | 0.063 | 0.050 | 4.088 | 3.872 | -4.025 | -3.822 | 25 | 14:29 | 28.75 |
| 4 | 15:02 | 0.056 | 0.040 | 3.668 | 3.913 | -3.612 | -3.873 | 25 | 15:07 | 28.54 |
| 5 | 15:42 | 0.068 | 0.150 | 2.536 | 2.636 | -2.468 | -2.486 | 25 | 15:47 | 27.69 |
| 6 | 16:52 | 0.058 | 0.000 | 1.641 | 1.726 | -1.583 | -1.726 | 25 | 17:04 | 28.75 |
| 7 | 9:55 | 0.063 | 0.110 | 0.700 | 0.628 | -0.637 | -0.518 | 25 | 10:00 | 27.07 |
| 8 | 10:32 | 0.005 | 0.410 | 0.037 | 0.443 | -0.032 | -0.033 | 25 | 10:35 | 28.30 |
| 9 | 11:06 | 0.555 | | 0.110 | | 0.445 | | 25 | 11:12 | 27.78 |
| 10 | 11:44 | 1.192 | | 0.112 | | 1.080 | | 25 | 11:47 | 27.15 |
| 11 | 12:18 | 1.883 | 2.270 | 0.111 | 0.457 | 1.772 | 1.813 | 25 | 12:23 | 26.71 |
| 12 | 12:56 | 2.403 | 2.361 | 0.096 | 0.118 | 2.307 | 2.244 | 25 | 12:58 | 26.67 |
| 13 | 13:35 | 3.128 | 3.084 | 0.087 | 0.000 | 3.041 | 3.084 | 25 | 13:40 | 26.82 |
| 14 | 14:11 | 3.773 | 3.670 | 0.080 | 0.000 | 3.693 | 3.670 | 25 | 14:15 | 26.33 |
| 15 | 14:48 | 3.742 | 3.643 | 0.079 | 0.000 | 3.663 | 3.643 | 25 | 14:51 | 28.95 |
| 16 | 16:20 | 4.740 | 4.889 | 0.067 | 0.000 | 4.673 | 4.889 | 25 | none | 26.43 |

### Example 2

In this example, the same experimental set up as Example 1 was used except for the following: batches were manufactured at 55% solids, the transflectance probe path length was adjusted to 6 mm, and sampling was done through the sight glass due to the high solids (high viscosity) of the material.

Table 5 lists the charges used in this example. At 30 minutes intervals, the reactor was sampled for offline FTIR stoichiometry (residual amine and anhydride end groups) analysis as in Example 1. The exact sample time was recorded in order to compare FTIR and NIR stoichiometry at the sampling time stamp. After sampling, 50 g of solid BPADA was added to the reactor through the sight glass opening. The reaction mixture was agitated at temperature and the sampling and addition steps were repeated every 30 minutes until the desired stoichiometry range was covered.

**Table 5**

| **Batch** | **BPADA Charge (g)** | **mPD charge (g)** | **PA Charge (g)** | **Initial oDCB Charge (g)** |
|---|---|---|---|---|
| 3 | 7325 | 1608 | 77.04 | 12010 |
| 4 | 7234 | 1608 | 77.06 | 11750 |

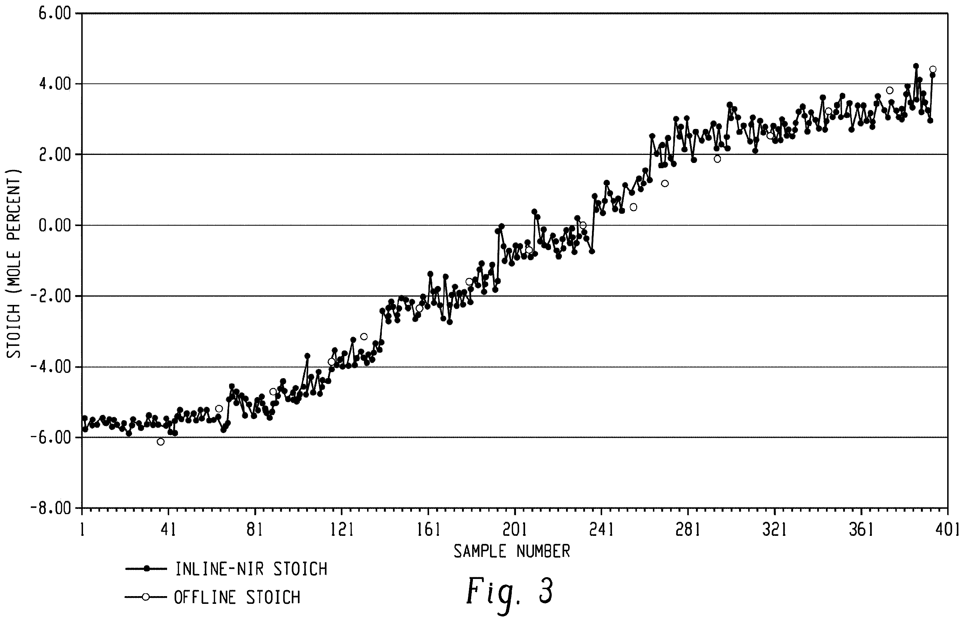

Tables 6 and 7 list the sampling times, solids %, and reference offline FTIR analytical results (anhydride end group stoich mole%, amine end group stoich mole% and anhydride-amine stoichiometry) for Batches 3 and 4 respectively. Similar to Example 1, chemometric multivariate partial-least squares (PLS) calibration models for BPADA (mole %) and mPD (mole %) were developed using Batch 4. These models were validated on spectral data acquired in Batch 3. Table 8 lists Batch 3 validation results with the corresponding inline NIR predictions for anhydride end group stoich mole%, amine end group stoich mole% and anhydride-amine stoichiometry. Figure 3, displays inline NIR prediction trends across the entire Batch 4 run. The offline FTIR measurements are depicted by the discrete data points. These results clearly shows the capability of using in-line NIR spectroscopy to track anhydride-amine stoichiometry in a reaction mixture containing polyamic acid at 50-55% solids.

**Table 6. Batch 3**

| **Sample #** | **Sample Time** | **Anydride end group Stoich** | **Amine end group Stoic** | **Anhydride-amine Stoich** | **% Solids** | **Addition Time** | **Dianhydride Add (**g) |
|---|---|---|---|---|---|---|---|
| 1 | 8:50 | 0.069 | 6.136 | -6.067 | 56.09 | 8:51 | 50 |
| 2 | 9:20 | 0.083 | 5.248 | -5.165 | 56.46 | 9:21 | 50 |
| 3 | 9:50 | 0.070 | 4.757 | -4.687 | 54.95 | 9:51 | 50 |
| 4 | 10:20 | 0.076 | 3.901 | -3.825 | 54.86 | 10:21 | 50 |
| 5 | 10:50 | 0.073 | 3.188 | -3.115 | 55.49 | 10:51 | 50 |
| 6 | 11:20 | 0.074 | 2.389 | -2.315 | 54.32 | 11:21 | 50 |
| 7 | 11:50 | 0.062 | 1.610 | -1.548 | 54.29 | 11:51 | 50 |
| 8 | 12:20 | 0.065 | 0.733 | -0.668 | 52.69 | 12:21 | 50 |
| 9 | 12:50 | 0.043 | 0.011 | 0.032 | 54.47 | 12:51 | 50 |
| 10 | 13:20 | 0.650 | 0.086 | 0.564 | 53.67 | 13:21 | 50 |
| 11 | 13:51 | 1.317 | 0.104 | 1.213 | 52.22 | 13:51 | 50 |
| 12 | 14:20 | 2.016 | 0.090 | 1.926 | 53.18 | 14:21 | 50 |
| 13 | 14:50 | 2.661 | 0.095 | 2.566 | 52.78 | 14:51 | 50 |
| 14 | 15:20 | 3.323 | 0.078 | 3.245 | 52.20 | 15:21 | 50 |
| 15 | 15:50 | 3.895 | 0.070 | 3.825 | 51.94 | 15:51 | 50 |
| 16 | 16:20 | 4.504 | 0.068 | 4.436 | 52.90 | 16:21 | 50 |

**Table 7. Batch 4**

| **Sample** # | **Sample Time** | **Anydride end group Stoich** | **Amine end group Stoic** | **Anhydride-amine Stoich** | **% Solids** | **Addition Time** | **Dianhydride Add (g)** |
|---|---|---|---|---|---|---|---|
| 1 | 8:35 | 0.090 | 6.056 | -5.966 | 56.34 | 8:36 | 50 |
| 2 | 9:06 | 0.085 | 5.354 | -5.269 | 56.86 | 9:07 | 50 |
| 3 | 9:35 | 0.084 | 4.519 | -4.435 | 55.67 | 9:36 | 50 |
| 4 | 10:05 | 0.082 | 3.719 | -3.637 | 55.88 | 10:06 | 50 |
| 5 | 10:36 | 0.081 | 3.063 | -2.982 | 55.58 | 10:37 | 50 |
| 6 | 11:05 | 0.069 | 2.320 | -2.251 | 55.76 | 11:06 | 50 |
| 7 | 11:35 | 0.076 | 1.463 | -1.387 | 54.65 | 11:36 | 50 |
| 8 | 12:06 | 0.068 | 0.593 | -0.525 | 54.17 | 12:07 | 50 |
| 9 | 12:35 | 0.142 | 0.003 | 0.139 | 56.82 | 12:36 | 50 |
| 10 | 13:05 | 0.753 | 0.084 | 0.669 | 53.31 | 13:06 | 50 |
| 11 | 13:36 | 1.405 | 0.104 | 1.301 | 52.77 | 13:37 | 50 |
| 12 | 14:05 | 2.089 | 0.089 | 2.000 | 52.39 | 14:06 | 50 |
| 13 | 14:35 | 2.713 | 0.085 | 2.628 | 53.06 | 14:36 | 50 |
| 14 | 15:05 | 3.344 | 0.080 | 3.264 | 55.14 | 15:06 | 50 |
| 15 | 15:36 | 4.059 | 0.066 | 3.993 | 51.41 | 15:37 | 50 |
| 16 | 16:08 | 4.532 | 0.053 | 4.479 | 51.36 | 16:09 | 50 |

**Table 8**

| **Sample #** | **Sample Time** | **Anydride end group Stoich by FTIR** | **Anydride end group Stoich by InLine-NIR** | **Amine end group Stoic by FTIR** | **Amine end group Stoich by Inline-NIR** | **Anydride-amine stoichiometry FTIR** | **Anydride-amine stoichiometry by Inline-NIR** | **% Solids** | **Addition Time** | **Dianhydride Add (g)** |
|---|---|---|---|---|---|---|---|---|---|---|
| | | **mole %** | **mole %** | **mole %** | **mole %** | **mole %** | **mole %** | | | |
| 1 | 8:50 | 0.069 | 0.867 | 6.136 | 6.444 | -6.067 | -5.577 | 56.09 | 8:51 | 50 |
| 2 | 9:20 | 0.083 | 0.341 | 5.248 | 5.721 | -5.165 | -5.381 | 56.46 | 9:21 | 50 |
| 3 | 9:50 | 0.070 | 0.000 | 4.757 | 4.648 | -4.687 | -4.955 | 54.95 | 9:51 | 50 |
| 4 | 10:20 | 0.076 | 0.000 | 3.901 | 3.823 | -3.825 | -3.946 | 54.86 | 10:21 | 50 |
| 5 | 10:50 | 0.073 | 0.000 | 3.188 | 3.137 | -3.115 | -3.732 | 55.49 | 10:51 | 50 |
| 6 | 11:20 | 0.074 | 0.000 | 2.389 | 2.442 | -2.315 | -2.514 | 54.32 | 11:21 | 50 |
| 7 | 11:50 | 0.062 | 0.168 | 1.610 | 1.814 | -1.548 | -1.646 | 54.29 | 11:51 | 50 |
| 8 | 12:20 | 0.065 | 0.855 | 0.733 | 1.622 | -0.668 | -0.766 | 52.69 | 12:21 | 50 |
| 9 | 12:50 | 0.043 | 0.775 | 0.011 | 0.804 | 0.032 | -0.029 | 54.47 | 12:51 | 50 |
| 10 | 13:20 | 0.650 | 1.405 | 0.086 | 0.447 | 0.564 | 0.958 | 53.67 | 13:21 | 50 |
| 11 | 13:51 | 1.317 | 1.985 | 0.104 | 0.225 | 1.213 | 1.760 | 52.22 | 13:51 | 50 |
| 12 | 14:20 | 2.016 | 2.273 | 0.090 | 0.060 | 1.926 | 2.213 | 53.18 | 14:21 | 50 |
| 13 | 14:50 | 2.661 | 2.671 | 0.095 | 0.097 | 2.566 | 2.574 | 52.78 | 14:51 | 50 |
| 14 | 15:20 | 3.323 | 3.281 | 0.078 | 0.000 | 3.245 | 3.281 | 52.20 | 15:21 | 50 |
| 15 | 15:50 | 3.895 | 3.455 | 0.070 | 0.000 | 3.825 | 3.455 | 51.94 | 15:51 | 50 |
| 16 | 16:20 | 4.504 | 4.289 | 0.068 | 0.000 | 4.436 | 4.289 | 52.90 | 16:21 | 50 |

### Example 3

The same set up as example 2 was used except the following: the mPD was added as molten mPD instead of a solution, the % solids was 45- 60%, nitrogen sparging was used (0 - 10 scfh), different end capping agents were used (phthalic anhydride (PA) and aniline), and temperature was varied (165 to 167 °C).

In this particular case, mPD was added molten to the reactor after the BPADA, PA (or aniline) and oDCB mixture was heated up to 145°C. After the mPD addition was completed, the polymer solution was heated up to the target temperature and agitated for 15-20 minutes, after which a sample was taken through the sight glass for stoichiometry (residual amine and anhydride end groups) analysis by FTIR. The exact time was recorded in order to compare FTIR and inline NIR stoichiometry at the sampling time stamp. The reaction mixture was heated for another 30 minutes after the stoichiometry adjustment was made and another sample was taken for FTIR and NIR analysis using an exact time stamp. After stoichiometric adjustment was complete the batch was diluted and discharged from the reactor. Results are shown in Table 9.

**Table 9**

| | **BPADA Charge (g)** | **mPD Charge (g)** | **PA Charge (g)** | **Anhydride end group stoich mole (%) FTIR** | **Anhydride end group mole (%) Inline NIR** | **Amine end group stoich mole% FTIR** | **Amine end group stoich mole% Inline NIR** | **Anhydride-amine stoichiometry FTIR** | **Anhydride-amine stoichiometry Inline NIR** | **% Solids** | **BPADA Add (g)** | **Temp (C)** |
|---|---|---|---|---|---|---|---|---|---|---|---|---|
| **BATCH 5** | | | | | | | | | | | | |
| **Sample 1** | **7324** | **1536** | **126.99** | 0.052 | 0.154 | 1.487 | 1.461 | -1.435 | -1.306 | 53.3 | | |
| **Sample 2** | | | | 0.054 | 0.054 | 1.138 | 1.225 | -1.084 | -1.171 | 53.59 | | |

| **BATCH 6** | | | | | | | | | | | | |
|---|---|---|---|---|---|---|---|---|---|---|---|---|
| **Sample 1** | **7324** | **1536** | **126.99** | 0.359 | 0.292 | 0.054 | 0.323 | 0.305 | -0.031 | 54.9 | 4.64 | 165 |
| **Sample 2** | | | | 0.172 | 0.221 | 0.067 | 0.130 | 0.105 | 0.091 | 55.0 | | |

| **BATCH 7** | | | | | | | | | | | | |
|---|---|---|---|---|---|---|---|---|---|---|---|---|
| **Sample 1** | **7324** | **1460** | **75.05** | 0.095 | 0.355 | 0.366 | 0.394 | -0.271 | -0.039 | 52.3 | 3.96 | 165 |
| **Sample 2** | | | | 0.084 | 0.195 | 0.241 | 0.071 | -0.157 | 0.123 | 53.3 | | |

| **BATCH 8** | | | | | | | | | | | | |
|---|---|---|---|---|---|---|---|---|---|---|---|---|
| **Sample 1** | **7326** | **1530** | **127.11** | 0.989 | | 0.056 | | 0.933 | | 55.2 | 14.2 | 165 |
| **Sample 2** | | | | 0.153 | 0.131 | 0.043 | 0.084 | 0.110 | 0.047 | 55.6 | | |

| **BATCH 9** | | | | | | | | | | | | |
|---|---|---|---|---|---|---|---|---|---|---|---|---|
| **Sample 1** | **7326** | **1530** | **127.13** | 0.505 | 0.530 | 0.056 | 0.150 | 0.449 | 0.380 | 56.6 | 6.84 | 165 |
| **Sample 2** | | | | 0.192 | 0.170 | 0.056 | 0.050 | 0.136 | 0.120 | 54.4 | | |

| **BATCH 10** | | | | | | | | | | | | |
|---|---|---|---|---|---|---|---|---|---|---|---|---|
| **Sample 1** | **7324** | **1532** | **127.10** | 0.486 | 0.440 | 0.068 | 0.120 | 0.418 | 0.320 | 54.1 | 10.77 | 165 |
| **Sample 2** | | | | 0.016 | 0.120 | 0.035 | 0.140 | -0.019 | -0.020 | 55.0 | | |

Inline NIR stoich determination was achieved using the calibration model developed in Example 1 augmented with representative data from Example 2. The inline stoichiometry results correlate well with offline FTIR stoichiometry. The stoichiometry for the last batch (Batch 10) was adjusted (from sample 1 to sample 2) solely using the inline NIR stoichiometry (mPD and DA) predictions. This was truly a 'blind batch'. The inline stoichiometry results show the capability of inline NIR to be used to correctly adjust the stoichiometry at 55% solids with reaction temperature of 165 °C.

This disclosure further encompasses the following aspects.

Aspect 1. A method of making a polyetherimide comprising: setting a target range for the anhydride-amine stoichiometry in a reaction mixture; combining a solvent, a diamine, a bis(ether anhydride), and an optional end capping agent to form the reaction mixture wherein the reaction mixture has a polyamic acid content; analyzing the amine and anhydride end group content of the reaction mixture using near infrared vibrational spectroscopy; calculating the anhydride-amine stoichiometry; comparing the calculated anhydride-amine stoichiometry to the target stoichiometry, and, when necessary, adjusting the concentration of bis(ether anhydride) or diamine based on the comparison of the calculated anhydride-amine stoichiometry to the target stoichiometry.

Aspect 2. The method of Aspect 1, wherein the diamine is m-phenylene diamine, p-phenylene diamine or a combination thereof and the bis(ether anhydride) is bisphenol A dianhydride.

Aspect 3. The method of Aspect 1 or 2, wherein the solvent is o-dichlorobenzene, dichlorotoluene, 1,2,4-trichlorobenzene, diphenyl sulfone, anisole, veratrole, diphenylether, or phenetole.

Aspect 4. The method of any of the preceding Aspects, wherein the reaction mixture further comprises an end capping agent.

Aspect 5. The method of any of the foregoing Aspects wherein the target range for anhydride-amine stoichiometry is -25 to 25 mole%.

Aspect 6. The method of any of the foregoing Aspects wherein analyzing the amine and anhydride end group content is performed inline.

Aspect 7. The method of any of the foregoing Aspects wherein analyzing the amine and anhydride end group content is performed using a probe having a fixed path length of 2 to 8 mm.

Aspect 8. The method of any of the foregoing Aspects, wherein the reaction mixture has a solids content of 20 to 70 wt%.

Aspect 9. The method of any of the foregoing Aspects, wherein the reaction mixture further comprises a catalyst.

Aspect 10. A method of making a polyetherimide comprising: setting a target range for the anhydride-amine stoichiometry in a reaction mixture; combining a solvent, a diamine, a bis(ether anhydride), and an optional end capping agent to form the reaction mixture having a solids content of 20 to 70 wt% wherein the reaction mixture has a polyamic acid content; sampling the reaction mixture under super-atmospheric pressure; analyzing the amine and anhydride end group content of the reaction mixture using near infrared vibrational spectroscopy; calculating the anhydride-amine stoichiometry; comparing the calculated anhydride-amine stoichiometry to the target stoichiometry, and, when necessary, adjusting the concentration of bis(ether anhydride) or diamine based on the comparison of the calculated anhydride-amine stoichiometry to the target stoichiometry.

Aspect 11. The method of Aspect 10, wherein the diamine is m-phenylene diamine, p-phenylene diamine or a combination thereof and the bis(ether anhydride) is bisphenol A dianhydride.

Aspect 12. The method of Aspect 10 or 11, wherein the solvent is o-dichlorobenzene, dichlorotoluene, 1,2,4-trichlorobenzene, diphenyl sulfone, anisole, veratrole, diphenylether, or phenetole.

Aspect 13. The method of any of Aspects 10 to 12, wherein the reaction mixture further comprises an end capping agent.

Aspect 14. The method of any of Aspects 10 to 13 wherein the target range for anhydride-amine stoichiometry is -25 to 25 mole%.

Aspect 15. The method of any of Aspects 10 to 14, wherein analyzing the amine and anhydride end group content is performed inline.

Aspect 16. The method of any of Aspects 10 to 15, wherein analyzing the amine and anhydride end group content is performed using a probe having a fixed path length of 2 to 8 mm.

Aspect 17. The method of any of Aspects 10 to 16, wherein the diamine is a molten diamine.

Aspect 18. The method of any of Aspects 10 to 17, wherein the reaction mixture further comprises a catalyst.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "some aspects", "an aspect", and so forth, means that a particular element described in connection with the aspect is included in at least one aspect described herein, and may or may not be present in other aspects. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl" includes groups containing carbon, hydrogen, and optionally one or more heteroatoms (e.g., 1, 2, 3, or 4 atoms such as halogen, O, N, S, P, or Si). "Alkyl" means a branched or straight chain, saturated, monovalent hydrocarbon group, e.g., methyl, ethyl, i-propyl, and n-butyl. "Alkylene" means a straight or branched chain, saturated, divalent hydrocarbon group (e.g., methylene (-CH₂-) or propylene (-(CH₂)₃-)). "Alkenyl" and "alkenylene" mean a monovalent or divalent, respectively, straight or branched chain hydrocarbon group having at least one carbon-carbon double bond (e.g., ethenyl (-HC=CH₂) or propenylene (-HC(CH₃)=CH₂-). "Alkynyl" means a straight or branched chain, monovalent hydrocarbon group having at least one carbon-carbon triple bond (e.g., ethynyl). "Alkoxy" means an alkyl group linked via an oxygen (i.e., alkyl-O-), for example methoxy, ethoxy, and sec-butyloxy. "Cycloalkyl" and "cycloalkylene" mean a monovalent and divalent cyclic hydrocarbon group, respectively, of the formula -CₙH₂ₙ₋ₓ and -CₙH₂ₙ₋₂ₓ- wherein x is the number of cyclization(s). "Aryl" means a monovalent, monocyclic or polycyclic aromatic group (e.g., phenyl or naphthyl). "Arylene" means a divalent, monocyclic or polycyclic aromatic group (e.g., phenylene or naphthylene). "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more halogen (F, Cl, Br, or I) substituents, which can be the same or different. The prefix "hetero" means a group or compound that includes at least one ring member that is a heteroatom (e.g., 1, 2, or 3 heteroatoms, wherein each heteroatom is independently N, O, S, or P.

"Substituted" means that the compound or group is substituted with at least one (e.g., 1, 2, 3, or 4) substituents instead of hydrogen, where each substituent is independently nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkylene (e.g, benzyl), C₇₋₁₂ alkylarylene (e.g, toluyl), C₄₋₁₂ heterocycloalkyl, C₃₋₁₂ heteroaryl, C₁₋₆ alkyl sulfonyl (-S(=O)₂-alkyl), C₆₋₁₂ arylsulfonyl (-S(=O)₂-aryl), or tosyl (CH₃C₆H₄SO₂-), provided that the substituted atom's normal valence is not exceeded, and that the substitution does not significantly adversely affect the manufacture, stability, or desired property of the compound. When a compound is substituted, the indicated number of carbon atoms is the total number of carbon atoms in the group, including those of the substituent(s).

While particular aspects have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A method of making a polyetherimide comprising: setting a target range for the anhydride-amine stoichiometry in a reaction mixture; combining a solvent, a diamine, a bis(ether anhydride), and an optional end capping agent to form the reaction mixture wherein the reaction mixture has a polyamic acid content; analyzing the amine and anhydride end group content of the reaction mixture using near infrared vibrational spectroscopy; calculating the anhydride-amine stoichiometry; comparing the calculated anhydride-amine stoichiometry to the target stoichiometry, and, when necessary, adjusting the concentration of bis(ether anhydride) or diamine based on the comparison of the calculated anhydride-amine stoichiometry to the target stoichiometry.

2. The method of claim 1, wherein the diamine is m-phenylene diamine, p-phenylene diamine or a combination thereof and the bis(ether anhydride) is bisphenol A dianhydride.

3. The method of claim 1 or 2, wherein the solvent is o-dichlorobenzene, dichlorotoluene, 1,2,4-trichlorobenzene, diphenyl sulfone, anisole, veratrole, diphenylether, or phenetole.

4. The method of any of the preceding claims, wherein the reaction mixture further comprises an end capping agent.

5. The method of any of the foregoing claims wherein the target range for anhydride-amine stoichiometry is -25 to 25 mole%.

6. The method of any of the foregoing claims wherein analyzing the amine and anhydride end group content is performed inline.

7. The method of any of the foregoing claims wherein analyzing the amine and anhydride end group content is performed using a probe having a fixed path length of 2 to 8 mm.

8. The method of any of the foregoing claims, wherein the reaction mixture has a solids content of 20 to 70 wt%.

9. The method of claim 8, wherein the reaction mixture is sampled under super-atmospheric pressure to provide a sample for analyzing the amine and anhydride end group content.

10. The method of any of the foregoing claims, wherein the reaction mixture further comprises a catalyst.
